(19) Europäisches Patentamt / European Patent Office / Office européen des brevets

(11) **EP 2 051 138 B1**

(12) **EUROPÄISCHE PATENTSCHRIFT**

(45) Veröffentlichungstag und Bekanntmachung des Hinweises auf die Patenterteilung:
**02.06.2010 Patentblatt 2010/22**

(51) Int Cl.:
*G02F 1/39* (2006.01)     *G06N 99/00* (2010.01)
*G02F 1/355* (2006.01)

(21) Anmeldenummer: **08450160.0**

(22) Anmeldetag: **17.10.2008**

(54) **Einrichtung zur Erzeugung von polarisationsverschränkten Photonen**

Device for generating polarisation-entangled photons

Dispositif pour la production de photons intriqués en polarisation

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **17.10.2007 AT 16692007**

(43) Veröffentlichungstag der Anmeldung:
**22.04.2009 Patentblatt 2009/17**

(73) Patentinhaber: **AIT Austrian Institute of Technology GmbH**
**1220 Wien (AT)**

(72) Erfinder:
- **Pacher, Christoph**
  **1200 Wien (AT)**
- **Finger, Norman**
  **82319 Starnberg (DE)**

(74) Vertreter: **Sonn & Partner Patentanwälte**
**Riemergasse 14**
**1010 Wien (AT)**

(56) Entgegenhaltungen:
**WO-A-2008/039261**

- **JIANG Y K ET AL: "Highly efficient polarization-entangled photon source using periodically poled lithium niobate waveguides" OPTICS COMMUNICATIONS, NORTH-HOLLAND PUBLISHING CO. AMSTERDAM, NL, Bd. 267, Nr. 1, 1. November 2006 (2006-11-01), Seiten 278-281, XP025252132 ISSN: 0030-4018 [gefunden am 2006-11-01]**
- **FIORENTINO M ET AL: "Compact sources of correlated and entangled photons" PROCEEDINGS OF SPIE - THE INTERNATIONAL SOCIETY FOR OPTICAL ENGINEERING - QUANTUM COMMUNICATIONS AND QUANTUM IMAGING V 2007 SPIE US, Bd. 6710, 25. September 2007 (2007-09-25), XP002512723**

**Beschreibung**

Die Erfindung betrifft eine Einrichtung zur Erzeugung von polarisationsverschränkten Photonen mittels parametrischer Abwärtskonvertierung, mit einer Wellenleiterstruktur, die in einem Substrat aus optisch nicht-linearem Material mit periodisch gepolten Bereichen ausgebildet ist, wobei der Wellenleiterstruktur im Betrieb Pumpphotonen von einem Pumplaser zuführbar sind, und wobei der Wellenleiterstruktur eine Trennvorrichtung zum Trennen der verschränkten Photonen, zur gesonderten Weiterleitung von Signalphotonen bzw. Idlerphotonen, nachgeordnet ist.

Einrichtungen zur Erzeugung von polarisationsverschränkten Photonen werden insbesondere in quantenkryptographischen Einrichtungen bei der Generierung eines Quanten-Schlüssels eingesetzt. Im Einzelnen wird mit "Quantenkryptographie" die Technik der Erzeugung und Verteilung symmetrischer Geheimnisse bezeichnet, wobei die Sicherheit, als Maß für die Vertraulichkeit und die Unverfälschtheit von an zwei voneinander entfernten Orten ausgegebenen identischen Bitfolgen, mit Methoden der Quanteninformationstheorie mathematisch exakt nachgewiesen werden kann (informationstheoretische Sicherheit). Die erzeugten und verteilten symmetrischen Geheimnisse können in weiterer Folge z.B. als Schlüssel für symmetrische kryptographische Chiffrierverfahren verwendet werden. Im Gegensatz dazu gibt es für herkömmliche, auf asymmetrischer Kryptographie basierende Schlüsselverteilungs-Systeme keinen derartigen Sicherheitsbeweis.

Die Quantenkryptographie wurde interdisziplinär zwischen den wissenschaftlichen Gebieten Quantenphysik, Quantenoptik, Informationstheorie, Kryptographie und Informatik entwickelt. Ein Überblick über die Grundlagen und Verfahren sowie die historische Entwicklung der Quantenkryptographie ist in den Artikeln Gisin, N., G. Ribordy, W. Tittel, H. Zbinden, "Quantum Cryptography", 2002 Rev. Mod. Phys. 74, 145; und Dušek, M, N. Lütkenhaus, M. Hendrych, "Quantum Cryptography", 2006, Progress in Optics, vol. 49, Edt. E. Wolf (Elsevier, 2006), enthalten.

Eine übliche quantenkryptographische Verbindung (engl.: quantum cryptographic link) besteht immer aus zwei Stationen bzw. Apparaturen. In der Literatur werden diese Stationen üblicherweise als ALICE- und BOB-Komponente bezeichnet. Diese an zwei voneinander entfernten Orten aufgestellten Stationen sind durch einen optischen Quantenkanal (Glasfaser-gebunden oder durch den freien Raum) sowie durch einen herkömmlichen, klassischen, unverschlüsselten, elektronischen Kommunikationskanal, auch öffentlicher Kanal genannt, verbunden.

Eine derartige quantenkryptographische Verbindung erzeugt in ihren ALICE- und BOB-Komponenten laufend symmetrische (d.h.: in den ALICE- und BOB-Komponenten identische) Geheimnisse, die zur weiteren Verwendung, z.B. als Schlüssel in angeschlossenen kryptographischen Systemen, über Datenkanäle nach außen geliefert werden.

Im Einzelnen werden bei der Quantenkryptographie zwischen zwei Partnern Photonen ausgetauscht, die Quanten-Information enthalten. Die beiden Partner messen bestimmte Eigenschaften dieser Photonen, wie z.B. die Polarisationsebene, erhalten dieselben Messergebnisse und können daher einen identen Quanten-Schlüssel aufbauen. Dabei werden Teile der Messergebnisse, wie z.B. die exakten Zeitpunkte, über öffentliche Kanäle ausgetauscht. Auf diese Weise können die beiden Partner die einzelnen Messungen einander exakt zuordnen.

Im Prinzip gibt es hierbei zwei Methoden, nämlich jene unter Verwendung von Einzelphotonen und jene unter Verwendung von verschränkten Photonen. Im Fall der Einzelphotonen-Methode erzeugt ein Partner eine Folge von einzelnen Photonen, die durch einen Polarisator geschickt werden, dessen Polarisationsebene zufällig variiert wird. Die Einstellung des Polarisators wird dem anderen Partner übermittelt. Wenn dann von diesem anderen Partner ein Photon registriert wird, ist damit auch dessen Polarisationsebene eindeutig festgelegt. Bei dieser Methode muss jedoch sichergestellt sein, dass tatsächlich nur jeweils ein einzelnes Photon erzeugt wird, da im Fall mehrerer Photonen derselben Polarisation ein Photon von einem Dritten abgefangen werden könnte.

Bei der Methode der polarisationsverschränkten Photonen werden durch eine spezielle Technik zwei Photonen gleichzeitig erzeugt, die dieselbe Quanten-Information enthalten. Je ein Photon wird zu einem der beiden Partner gesandt, so dass die beiden Partner gleichzeitig ein identes Messergebnis erhalten und somit jeder für sich den selben Quanten-Schlüssel aufbauen kann.

Grundlage für jede Einrichtung zur Erzeugung von verschränkten Photonen ist die parametrische Abwärtskonvertierung in einem nicht-linearen Kristall, in dem Pumpphotonen (Index p) in sog. Signalphotonen (Index s) und Idlerphotonen (Index i) umgewandelt werden. Quantenmechanisch gesehen wird der Zustand $|P\rangle$ in den Produkt-Zustand $|s\rangle|i\rangle$ konvertiert. Verantwortlich für den Abwärtskonvertierungsprozess ist der Suszeptibilitätstensor $\overleftrightarrow{\chi}^{(2)}$, welcher die (quadratisch) nicht-lineare Polarisation mit dem elektrischen Feld E wie folgt verknüpft:

$$P_i^{(2)}(t) = \sum_{j,k} \chi_{ijk}^{(2)} E_j(t) E_k(t)$$

Für die zeitlichen Fourierkomponenten der Felder ergibt sich folgender Zusammenhang:

$$P_i^{(2)}(\omega_3 = \omega_1 + \omega_2) = \sum_{j,k} d_{ijk}(-\omega_3, \omega_1, \omega_2) E_j(\omega_1) E_k(\omega_2)$$

wobei die Beziehung $\chi_{ijk}^{(2)} = 2 d_{ijk}$ gilt. Bei der Umwandlung eines Pumpphotons in ein Signal- und ein Idlerphoton muss die Erhaltung der Energie

$$\omega_p = \omega_s + \omega_i$$

sowie die Phasen-Anpassbedingung

$$\beta_{x,p} = \beta_{x,s} + \beta_{x,i} \tag{1}$$

erfüllt sein, wobei mit $\omega$ die Kreisfrequenz und mit $\beta_x = \bar{n}\omega/c$ die jeweiligen Propagationskonstanten bezeichnet sind. Es wurde Wellenausbreitung in die x-Richtung vorausgesetzt. $\bar{n}$ ist der (effektive) Brechungsindex für die jeweilige Frequenz/ Polarisation der elektromagnetischen Welle und c die Lichtgeschwindigkeit im Vakuum.

Da die Phasen-Anpassbedingung Gl. (1) nicht ohne weiteres zu erfüllen ist, ist es günstig, periodisch gepolte Kristalle zu verwenden, in denen die ferroelektrischen Domänen mit einer Polungsperiode $\Lambda$ alternierend in die (+c) und (-c) -Richtung des Kristalls gepolt sind. Damit muss beim Abwärtskonvertierungsprozess die Quasi-Phasen-Anpassbedingung

$$\beta_{x,p} = \beta_{x,s} + \beta_{x,i} + m\frac{2\pi}{\Lambda} \tag{2}$$

erfüllt sein, wobei in diesem Fall die Kopplung zwischen dem Pump-, Signal- und Idlerfeld über die m-te Fourierkomponente des Suszeptibilitätstensors $\overset{\leftrightarrow}{\chi}^{(2)}$ erfolgt.

In einem z-orientierten Lithiumniobat (LiNbO$_3$)-Kristall ist der größte nicht-lineare Koeffizient der Koeffizient $d_{33} = \chi_{333}^{(2)}/2$, der mit der Typ-I-Abwärtskonvertierung eines vertikal (d.h. z-) polarisierten Pumpphotons in vertikal polarisierte Signal- und Idlerphotonen (Übergang $\omega_p^V \to \omega_s^V + \omega_i^V$) verknüpft ist. Der nicht-lineare Koeffizient, der für die Typ-I-Abwärtskonvertierung eines vertikal-polarisierten Pumpphotons in horizontal-polarisierte Signal- und Idlerphotonen verantwortlich ist (Übergang $\omega_p^V \to \omega_s^H + \omega_i^H$), ist der Koeffizient $d_{31} = \chi_{311}^{(2)}/2$, welcher einen Betrag von nur ungefähr einem Siebentel der Größe von $d_{33}$ aufweist.

Die Effizienz $\eta$ der Abwärtskonvertierung bei Durchlaufen einer Strecke der Länge L lässt sich unter der Annahme von vernachlässigbarer Erschöpfung der Pumpwelle (d.h. die Leistung der Pumpwelle $P_p$ bleibt näherungsweise konstant) und idealer Quasi-Phasenanpassung Gl. (2) als

$$\eta = \frac{N_i(L)}{N_s(0)} = \nu^2 \kappa_i^2 L^2 P_p \frac{\omega_s}{\omega_i} \tag{3}$$

anschreiben. Dabei sind $N_i(L)$ bzw. $N_s(0)$ die Idlerphotonenzahl am Ausgang bzw. die Signalphotonenzahl am Eingang; $\nu$ ist der Feldüberlappungsfaktor, der die Stärke der transversalen Überlappung der Pump-, Signal und Idlerfelder

beschreibt, und $\kappa$ ist der Kopplungsfaktor. Es wurde vorausgesetzt, dass die Idlerphotonenzahl am Eingang Null ist. Die Photonenzahl ist mit der elektromagnetischen Leistung der Welle über die Beziehung $N=P/\eta\omega$ verknüpft. Der Kopplungsfaktor $\kappa_i$ errechnet sich zu

$$\kappa_i = \frac{\omega_i d_{eff}}{\sqrt{2\varepsilon_0 c^3 \bar{n}_p \bar{n}_s \bar{n}_i}}$$

wobei $d_{eff}$ die m-te Fourierkomponente des für die Abwärtskonvertierung verantwortlichen d-Koeffizienten ist, und $\bar{n}_p$, $\bar{n}_s$.., $\bar{n}_i$ die (effektiven) Brechungsindizes für die Pump-, Signal- und Idlerwelle bezeichnen; $\varepsilon_0$ ist die Dielektrizitätskonstante des Vakuums.

Die Verwendung von Wellenleitern in nicht-linearen optischen Komponenten erbringt die Vorteile einer starken örtlichen Begrenzung der Pump-, Signal- und Idler-Felder (was den Feldüberlappungsfaktor $\nu$ erhöht), einer großen Interaktionslänge und der Möglichkeit eines effizienten elektrooptischen Abstimmens. An sich sind derartige Wellenleiterausbildungen Stand der Technik in nicht-linearen optischen Einrichtungen, wie Frequenzmischern (siehe z.B. R. V. Roussev, C. Langrock, J. R. Kurz, M. M. Fejer, "Periodically poled lithium niobate waveguide sum-frequency generator for the efficient single-photon detection at communication wavelengths", Optics Letters, Vol. 29, Seiten 1518 ff. (2004)), parametrischen Oszillatoren (siehe z.B. X. Xie, M. M. Fejer, "Two-spatial-mode parametric amplifier in lithium niobate waveguides with asymmetric Y junctions", Optics Letters, Vol. 31, Seiten 799ff. (2006)) und auch Quellen für verschränkte Photonen (S. Tanzilli, W. Tittel, H. De Riematten, H. Zbinden, P. Baldi, M. De Micheli, "PPLN waveguide for quantum communication", Eur. Phys. J. D, Vol. 18, Seiten 155ff. (2002)).

Bisher wurde für die Erzeugung von polarisationsverschränkten Photonen, die quantenmechanisch gesehen einem Superpositionszustand

$$|\Psi\rangle = \frac{1}{\sqrt{2}}\left(\left|s^H\right\rangle\left|i^H\right\rangle + |A|e^{i\varphi}\left|s^V\right\rangle\left|i^V\right\rangle\right) \qquad (4)$$

mit einer Phasenverschiebung $\varphi$ zwischen den Horizontal- und Vertikal-Zuständen entsprechen, eine Reihe von unterschiedlichen Lösungsansätzen umgesetzt. Idealerweise sollte die Konstante |A| den Wert eins haben.

Eine Möglichkeit, polarisationsverschränkte Photonen zu erzeugen, ist, wie im Artikel von C. Kurtsiefer, M. Oberpaierleiter und H. Weinfurter, "High-efficiency entangled photon pair collection in type-II parametric fluorescence", Phys. Rev. A, Vol. 64, Seiten 023802 ff. (2001) dargestellt, die Ausnutzung von Typ-II Abwärtskonversion. Nachteilig an diesem Verfahren ist die Notwendigkeit von optischen Einrichtungen zur Kompensation der Temperaturdrift, wodurch ein kompakter Aufbau (wie z.B. auf einem einzelnen optischen Chip) nicht möglich ist.

Die Verwirklichung von Zweikristallkonfigurationen, in denen die Erzeugung von horizontal und vertikal polarisierten Photonen in zwei hintereinander liegenden, um 90 Grad gegeneinander verdrehten, nicht-linearen Kristallen mittels Typ-I-Konversion erfolgt, wurden in den Artikeln P. G. Kwiat, E. Waks, A. G. White, I. Appelbaum, P. H. Eberhard, "Ultra-bright source of polarization-entangled photons", Physical Review A, Vol. 60, R773-R776 (1999) und J. B. Altepeter, E. R. Jeffrey, P. G. Kwiat, "Phase-compensated ultra-bright source of entangled photons", Optics Express, Vol. 13, Seiten 8951 ff., 2005 beschrieben. Des Weiteren wurden Zweikristallkonfigurationen vorgeschlagen, in denen periodisch gepolte LiNbO$_3$-Kristalle mittels Glasfaserkabeln optisch verbunden wurden; siehe: Y. K. Jiang, A. Tomita: "The generation of polarization-entangled photon pairs using periodically poled lithium niobate waveguides in a fibre loop", J. Phys. B, Vol. 40, Seiten 437 ff. (2007).

In der Publikation Y. K. Jiang, A. Tomita, "Highly efficient polarization-entangled photon source using periodically poled lithium niobate waveguides", Optics Commun., Vol. 267, Seiten 278 ff. (2006) wird eine Photonenquelle beschrieben, die nur einen nicht-linearen Kristall benötigt. Auf dem Kristall befinden sich zwei voneinander räumlich getrennte Wellenleiter, in denen jeweils vertikal polarisierte Photonen erzeugt werden. Zur Erzeugung der horizontalen Polarisation wird einem dieser Wellenleiter eine externe, fasergekoppelte Einrichtung zur Drehung der Polarisation nachgeschaltet.

Die Merkmale des Oberbegriffs von Anspruch 1 sind aus diesem Dokument bekannt.

Um eine effiziente Erzeugung von Photonen mit beiden Polarisationen, TM (vertikal polarisiert) und TE (horizontal polarisiert), auf einem Wafer zu erreichen, werden Wellenleiter benötigt, die sowohl TM-Moden als auch TE-Moden unterstützen. Wenngleich die im vorstehenden Artikel von S. Tanzilli et al. (2002) bereits angesprochene SPE-Methode (SPE - Soft Proton Exchange - Weicher Protonaustausch) im Hinblick auf die Erzielung von PPLN-Wellenleitern (PPLN - periodically poled Lithium niobate) mit niedrigen Verlusten attraktiv ist, gibt es doch Probleme, da der Protonaustauschprozess nur den außerordentlichen Brechungsindex $n_e$ erhöht, den ordentlichen Brechungsindex $n_o$ jedoch praktisch unverändert belässt. Demgemäß können bei Verwendung dieser sehr gut etablierten Technik nur Wellenleiter, die TM-Moden leiten, erhalten werden. Um hier Abhilfe zu schaffen, wurden Titan (Ti)- oder Zink (Zn)-diffundierte bzw. -dotierte Wellenleiter vorgesehen, die imstande sind, beide Polarisationen zu leiten. Es sind Zn-dotierte Wellenleiter zu bevorzugen, da sich bei Ti-diffundierten Wellenleitern der Nachteil einer höheren Empfänglichkeit für optisch induzierte Schäden ergibt.

Es ist nun Aufgabe der Erfindung, eine Einrichtung zur Erzeugung von polarisationsverschränkten Photonen vorzuschlagen, die außerordentlich kompakt, mit vergleichsweise kleinen Abmessungen, insbesondere im Bereich von 5 cm bis 10 cm, ausgebildet sein kann und die ferner außerordentlich robust ist und überdies vorteilhafte Abstimmmöglichkeiten bei der Erzeugung der verschränkten Photonen bietet. Die Erfindung basiert dabei auf der Erkenntnis, dass ein effizientes elektrisches und thermisches Abstimmen (Tuning) im Hinblick auf die Quasi-Phasenanpassungsbedingung (siehe obige Gleichung (2)) bei der Umwandlung $\omega_p^V \rightarrow \omega_s^H + \omega_i^H$ erzielt werden kann. Da für die Ausbreitungskonstante die Beziehung $\beta_x = \bar{n}\omega/c$ gilt und der effektive Moden-Brechungsindex $\bar{n}$ im Wesentlichen durch den außerordentlichen/ordentlichen Brechungsindex bei der vertikalen bzw. horizontalen Polarisation bestimmt wird, wobei sehr unterschiedliche elektrooptisch und thermisch induzierte Indexänderungen auftreten, kann ein vergleichsweise breiter Abstimmbereich erzielt werden.

Demgemäß sieht die Erfindung zur Lösung der vorstehenden Aufgabe eine Einrichtung gemäß Anspruch 1 vor.

Bei der erfindungsgemäßen Einrichtung sind somit alle erforderlichen Komponenten für die Erzeugung der polarisationsverschränkten Photonen in einem Substrat vereinigt, wobei dieses Substrat oder dieser Chip, beispielsweise aus Lithiumniobat, eine Längsabmessung von bloß ca. 7 cm bis 8 cm (ca. 3 Zoll) aufweisen kann. Diese kompakte Ausführung erbringt weiters den Vorteil, dass keine Nachjustierung, z.B. bei Erschütterungen oder Vibrationen, erforderlich ist, im Gegensatz zu den Photonenquellen gemäß Stand der Technik.

Um die in das Substrat (nachstehend auch als "Wafer" bezeichnet) "eingeschossenen" Pumpphotonen entsprechend auf die beiden PPLN-Wellenleiter zur Erzeugung der horizontal bzw. vertikal polarisierten Photonen aufzuteilen, kann der im Substrat ausgebildete Strahlteiler eine Wellenleiteranordnung mit zwei Wellenleitern aufweisen, mit denen die beiden parallel geschalteten Wellenleiter verbunden sind. Dabei ist es weiters günstig, wenn zur Strahlteilung im Substrat zwei einander benachbarte Wellenleiter gebildet sind, denen eine elektronische Abstimmvorrichtung zugeordnet ist, und von denen einer mit einem Eingangs-Wellenleiter zur Zuführung der Pumpphotonen verbunden ist. Mit einer derartigen Strahlteiler-Ausbildung wird zusätzlich die angestrebte getrennte Ausbildung der Einrichtung unter Verwendung bloß eines Wafers begünstigt.

Es sei hier erwähnt, dass an sich z.B. aus dem Artikel von Leon McCaughan, "Low-Loss Polarization-Independent Electrooptical Switches at $\lambda = 1.3\ \mu m$", Journal of Lightwave Technology, Vol. LT-2, No. 1, Februar 1984, Seiten 51-55, eine vergleichbare Schalt- oder Teileranordnung mit Wellenleiterkonfiguration bekannt ist, allerdings zu dem Zweck, elektrooptische Schalter bzw. Modulatoren zur Verfügung zu stellen.

Im Strahlteiler kann die Aufteilung der Pumpphotonen für die Umwandlung in vertikal polarisierte Photonen (im einem oder "ersten" PPLN-Wellenleiter) bzw. in horizontal polarisierte Photonen (im anderen oder "zweiten" PPLN-Wellenleiter) im Verhältnis von ca. $(d_{eff}^H L_H)^2 : (d_{eff}^V L_V)^2$ vorgesehen werden (dieses Verhältnis entspricht dem inversen Verhältnis der Konversionseffizienzen (Gl. (3)) in den jeweiligen PPLN-Wellenleitern mit den Längen $L_V$ und $L_H$. Selbstverständlich hängt dieses Verhältnis vom jeweils verwendeten Substratmaterial ab, wobei sich für z-geschnittene Lithiumniobat-Wafer unter der Voraussetzung, dass $L_V = L_H$ gilt, ein Verhältnis von ca. $1:7^2$ ergibt, wie nachfolgend noch näher erläutert werden wird.

Das Wellenlängenfilter, mit dem die Signalphotonen und die Idlerphotonen, die unterschiedliche Wellenlängen haben, voneinander getrennt werden, ist zweckmäßiger Weise polarisationsunabhängig, um sowohl vertikal polarisierte Photonen als auch horizontal polarisierte Photonen unabhängig von ihrer Polarisation durchzuleiten. Für eine Vereinfachung der Wellenleiterausbildung ist es hierbei weiters günstig, wenn das Wellenlängenfilter an einen die Vereinigungsstrecke im Substrat bildenden Vereinigungs-Wellenleiter angeschlossen ist. Eine besonders wirksame Realisierung des Wellenlängenfilters ergibt sich dabei weiters, wenn sich ein gemeinsamer Ausgangsteil des Vereinigungs-Wellenleiters durch den Wellenlängenfilter-Bereich im Substrat hindurch erstreckt und ihm benachbart ein Koppel-Wellenleiter im Wellenlängenfilter-Bereich im Substrat ausgebildet ist.

Eine besonders günstige, robuste Wellenleiterstruktur, die sowohl TM-Moden als auch TE-Moden mit gutem Wirkungsgrad führen kann, wird durch einen Rippen-Wellenleiter erhalten, der überdies bei Anbringung einer Elektrode auch einer elektrischen Feinabstimmung zugänglich ist. Es sei hier erwähnt, dass an sich ein Rippen-Wellenleiter beispielsweise aus dem Artikel von Masaki Asobe et al., "A Highly Damage-Resistant Zn:LiNbO3 Ridge Waveguide and its Application to a Polarization-Independent Wavelength Converter", IEEE Journal of Quantum Electronics, Vol. 39, Nr.

10, Oktober 2003, Seiten 1327-1333, bekannt ist. Es wird dort zwar bereits auf die hohe Beständigkeit im Hinblick auf optisch induzierte Schäden bei hohen Intensitäten des Pumpfeldes einerseits und auf eine stabile parametrische Verstärkung andererseits hingewiesen, jedoch wird dieser Rippen-Wellenleiter nur in Zusammenhang mit einem Wellenlängenwandler (Frequenzwandler) beschrieben.

Eine andere Möglichkeit für die Bildung der PPLN-Wellenleiter, zumindest des zweiten Wellenleiters, ist das - an sich bekannte - Vorsehen einer Diffusionszone im Substrat, wobei auch hier eine vorteilhafte elektrische Tuning-Möglichkeit bei Anbringung einer Elektrode oberhalb der Diffusionszone, die den Wellenleiter bildet, unter Zwischenanordnung einer Isolierschicht, möglich ist.

Bei der vorliegenden Einrichtung ist weiters vorgesehen, durch Wahl der Polungs-Perioden und -Ordnungen der periodisch gepolten Substrat-Bereiche die Signalphotonen bzw. die Idlerphotonen in den beiden Wellenleitern jeweils mit der selben Signal-Wellenlänge einerseits bzw. Idler-Wellenlänge andererseits zu erzeugen. Mit anderen Worten, es haben einerseits die vertikal polarisierten Signalphotonen und die horizontal polarisierten Signalphotonen die selbe Wellenlänge, und andererseits haben auch die vertikal und horizontal polarisierten Idlerphotonen die selbe Wellenlänge.

Für ein effizientes Abstimmen der Einrichtung bei der Erzeugung der polarisationsverschränkten Photonen kann das Substrat einerseits mit einem Heizelement, wie etwa einem Peltier-Element, zur thermischen Abstimmung verbunden sein, und andererseits können, wie bereits vorstehend angedeutet, zumindest dem anderen Wellenleiter Abstimmelektroden zum Tunen zugeordnet sein, wobei dann durch Anlegen eines entsprechenden elektrischen Feldes der effektive Brechungsindex des anderen Wellenleiters angepasst wird.

Eine günstige Anordnung ergibt sich dabei, wenn über dem anderen Wellenleiter eine Erdpotential-Elektrode angeordnet ist, neben der eine im Betrieb an einem Gleichstrom-Potential liegende Elektrode vorgesehen ist. Im Fall eines Diffusionszonen-Wellenleiters kann bei Vorsehen eines Lithiumniobat-Substrats der bzw. jeder Wellenleiter durch Diffusion von bzw. Dotieren mit Titan (Ti) oder Zink (Zn) gebildet werden.

Die Erfindung wird nachfolgend anhand von in der Zeichnung schematisch veranschaulichten bevorzugten Ausführungsbeispielen, auf die sie jedoch nicht beschränkt sein soll, noch weiter erläutert. Im Einzelnen zeigen in der Zeichnung:

Fig. 1 schematisch eine quantenkryptographische Verbindung zwischen zwei Partnern;

Fig. 2 schematisch in einer Art Blockschaltbild die wesentlichen quantenkryptographischen Einrichtungen in einer Teilnehmerstation für den Fall der Erzeugung von verschränkten Photonen;

Fig. 3 eine schematische Draufsicht auf eine Einrichtung zur Erzeugung von verschränkten Photonen unter Verwendung eines einzigen Substrats oder Wafers mit darin ausgebildeten Wellenleiterkomponenten;

Fig. 4 einen Querschnitt durch einen Teil eines derartigen Substrats im Bereich des dort unteren Wellenleiters, wobei ein Rippen-Wellenleiter als Beispiel veranschaulicht ist;

Fig. 5 in einem ähnlichen Querschnitt wie Fig. 4 eine Diffusions-Wellenleiterstruktur;

Fig. 6 eine Teil-Draufsicht auf ein derartiges Substrat der Einrichtung gemäß Fig. 3, wobei in Fig. 6 mehr im Detail eine Ausbildung des Strahlteilers veranschaulicht ist; und

Fig. 7 in einer ähnlichen Teil-Draufsicht die Ausbildung eines Wellenlängenfilters mit Wellenleitern.

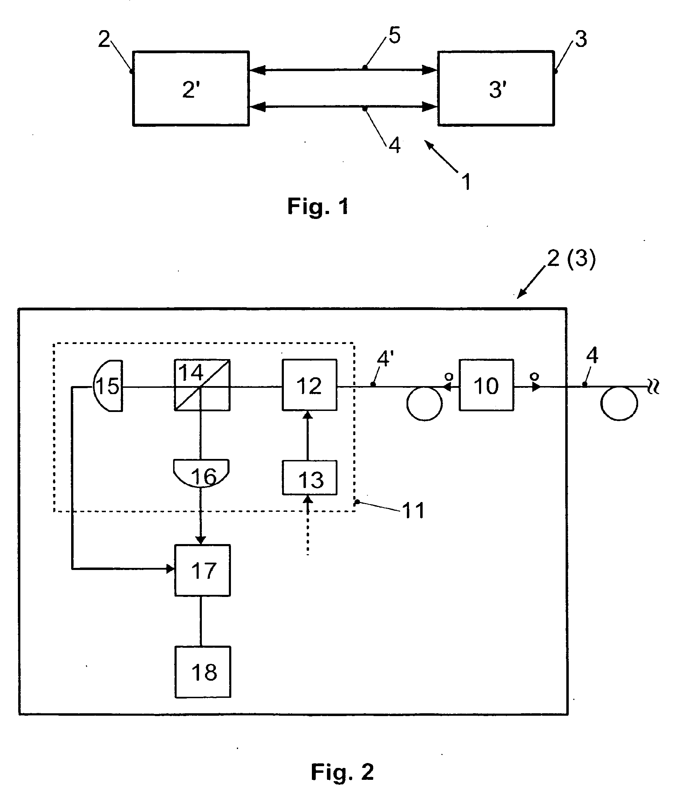

In Fig. 1 ist eine herkömmliche quantenkryptographische Verbindung 1 mit zwei Partnern 2, 3, mit entsprechenden Apparaturen 2' bzw. 3', gezeigt, wobei zwischen den beiden Partnern oder Stationen 2, 3 einerseits ein optischer Quantenkanal 4 und andererseits ein klassischer, öffentlicher Datenkanal 5 vorliegen. Der Quantenkanal 4 kann beispielsweise durch eine Glasfaserleitung oder aber durch den freien Raum gebildet sein, wobei in beiden Fällen entsprechende Sende- und Empfangseinrichtungen in den Apparaturen 2', 3' vorhanden sind. Die Stationen 2, 3 werden in der Literatur üblicherweise als ALICE-Komponente bzw. BOB-Komponente bezeichnet, und eine Stelle, die versucht den Quantenkanal 4, über den der Rohschlüssel ausgetauscht wird, abzuhören, wird in der Literatur üblicherweise mit EVE (Wortspiel, analog zu engl. eavesdropper - Lauscher oder Lauscherin) bezeichnet. Eine mehr ins Detail gehende Erläuterung insbesondere hinsichtlich der Ausbildung der einzelnen Komponenten sowie der physikalischen Vorgänge, und zwar auch im Fall eines Abhörversuches, kann sich hier im Hinblick auf die bereits genannte Literatur erübrigen. Nachfolgend soll nur der allgemeine Aufbau einer solchen Station 2 oder 3 anhand der Fig. 2 in einer allgemeinen Form näher erläutert werden.

Demgemäß zeigt Fig. 2 eine solche Station 2 (oder 3), die Quantenoptik-Mittel enthält, die einem Quantenkanal 4 zugeordnet ist, über den Quanteninformation in der Form von optischen Photonen ausgetauscht wird. Im Einzelnen ist in dieser Station 2 eine Photonenpaar-Quelle 10 vorgesehen. Diese Photonenpaar-Quelle 10 ist über eine interne Quantenleitung 4' weiters mit einem Photonen-Detektor 11 innerhalb der Station 2 verbunden (ein korrespondierend aufgebauter Detektor ist in der Partnerstation, z.B. 3, vorhanden).

Der Detektor 11 enthält eingangsseitig einen aktiven Polarisator 12, dem über eine Steuereinheit 13 ein entsprechendes Einstellsignal zugeführt wird. Das jeweilige Photon gelangt dann zu einem polarisierenden Strahlteiler 14, dem zwei Lawinenphotodioden 15, 16 nachgeschaltet sind, an deren Ausgänge eine Analyseeinheit 17, z.B. ein Zeitintervallanalysator, angeschlossen ist. Im Übrigen sind die sonst üblichen Kommunikationsansteuereinheiten zusammen mit einem Schaltungsmodul 18 zusammengefasst.

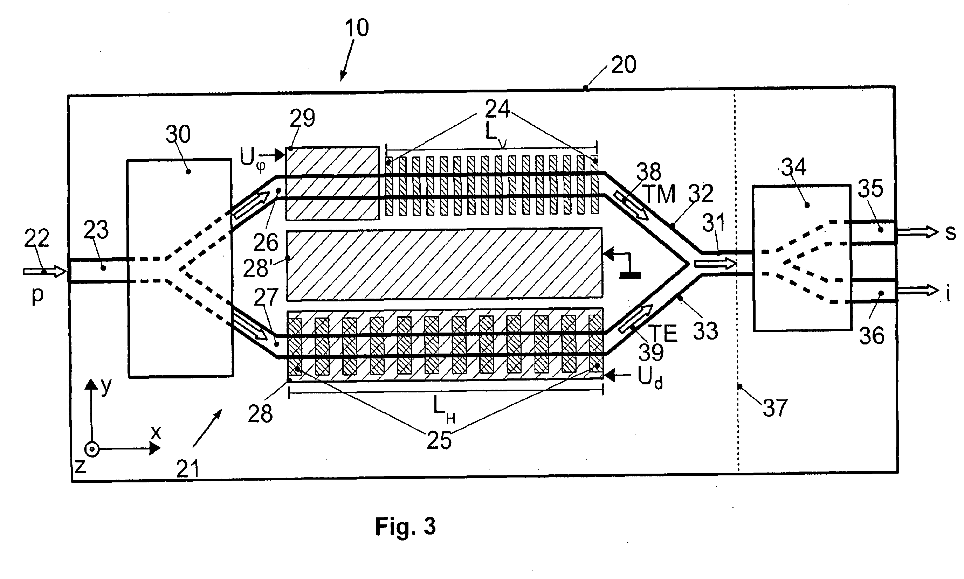

Die Photonenpaar-Quelle 10 ist in herkömmlicher Weise mit einem Pumpstrahllaser aufgebaut, wobei der Pumpstrahl einem Wafer 20 (s. Fig. 3) zugeführt wird, um in diesem die verschränkten Photonen oder "qubits" zu erzeugen.

Gemäß Fig. 3 enthält der Wafer oder Chip 20, d.h. das Substrat 20, eine Wellenleiteranordnung oder -struktur 21 mit verschiedenen Wellenleitern, die nachstehend noch näher in ihrer gegenseitigen Zuordnung und hinsichtlich ihrer Funktion erläutert werden. Ein Pumpstrahl 22 wird dem Substrat 20, und dabei konkret einem Eingangs-Wellenleiter 23, zugeführt, d.h. es werden auf diese Weise Photonen in den Kristall eingeschossen, um in weiterer Folge durch Photonenzerfall die Photonenpaare bzw. verschränkten Photonen zu erhalten. Dieser Mechanismus ist an sich bekannt und soll hier nur ganz kurz angedeutet werden.

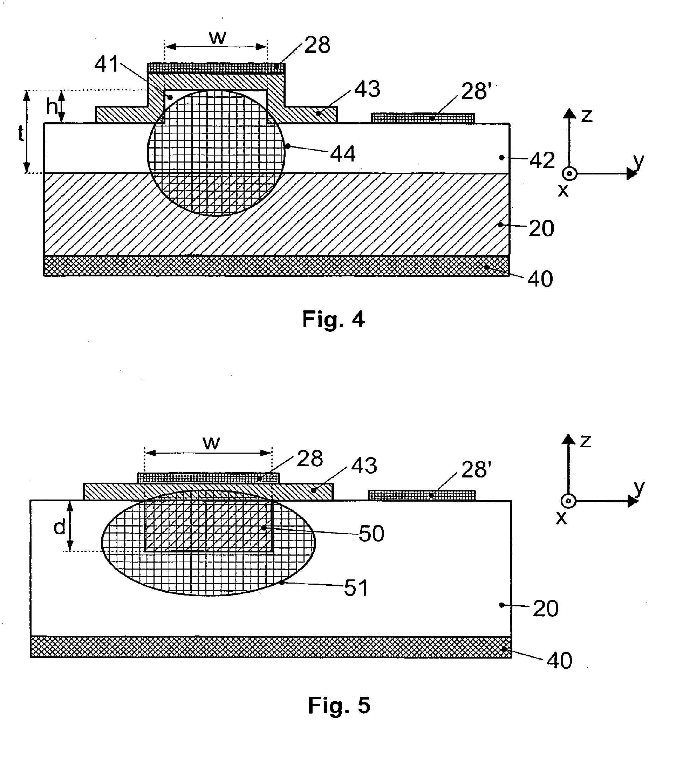

Der Chip bzw. das Substrat 20 besteht aus einem Material mit ausreichend großen nicht-linearen Koeffizienten $d_{33}$ und $d_{31}$, wobei bevorzugt ein z-geschnittenes Lithiumniobat (LiNbO$_3$) verwendet wird. Die c-Kristallachse des Materials ist parallel zur z-Achse (s. die Achsenbezeichnungen in Fig. 3 links unten, die das Chip-Koordinatensystem angeben). Im Substrat oder Wafer 20 sind zwei Bereiche 24, 25 vorhanden, wo das Kristallmaterial periodisch gepolt wird. Die Polungsperioden werden mit $\Lambda_V$ und $\Lambda_H$ bezeichnet (mit V - vertikal und H - horizontal). Die Längen dieser Bereiche 24, 25 sind mit $L_V$ bzw. $L_H$ angegeben. Durch diese Bereiche 24, 25 erstrecken sich Wellenleiter 26 (der im Betrieb jeweils vertikal polarisierte Pump-, Signal- und Idlerphotonen führt) bzw. 27 (der im Betrieb vertikal polarisierte Pumpphotonen und horizontal polarisierte Signal- und Idlerphotonen führt), wobei der eine, in Fig. 3 obere Wellenleiter 26 auch als "erster" Wellenleiter 26 und der anderen, in Fig. 3 untere Wellenleiter 27 auch als "zweiter" Wellenleiter 27 bezeichnet wird. In Fig. 3 sind weiters in den Bereichen 24, 25 die umgepolten Teilbereiche (nicht näher bezeichnet) der Einfachheit halber schraffiert angedeutet. Überdies ist auf dem in Fig. 3 unten dargestellten, dem zweiten Wellenleiter 27 zugehörigen Bereich 25 eine - im gezeigten Beispiel an einer Gleichspannung $U_d$ (mit einer typischen Größenordnung von etwa 10 V) liegende - flächige Elektrode 28 vorgesehen, vgl. auch Fig. 4; weiters ist daneben - in Fig. 3 oberhalb hievon eingezeichnet - eine Elektrode 28' vorgesehen, die an Masse liegt. Dieses Elektrodenpaar 28, 28' wird, wie nachstehend noch erläutert werden wird, zur Feinabstimmung des weiteren Wellenleiters 27 verwendet. Des Weiteren ist über dem erstgenannten Wellenleiter 26 eine weitere, mit einer Gleichspannung $U_\varphi$ beaufschlagte, Elektrode 29 angebracht, die zur elektrooptischen Justierung der Phase $\varphi$ (s. Gl. (4)) dient. Es erweist sich als günstig, diese Elektrode 29 mit einer typischen Länge von einigen Millimetern oberhalb des Wellenleiters 26 zu platzieren: aufgrund des Platzbedarfs wird zwar die maximal mögliche Länge $L_V$ des periodisch gepolten Bereiches 24, in dem die Abwärtskonvertierung erfolgt, reduziert; da die Übergangswahrscheinlichkeit je Längeneinheit bei der Erzeugung von vertikal polarisierten Photonen in z-geschnittenem LiNbO$_3$ aber um etwa einen Faktor 7 höher ist als für horizontal polarisierte Photonen, sind die Effizienzeinbußen geringer, als wenn die Elektrode 29 oberhalb des Wellenleiters 27 angebracht wäre.

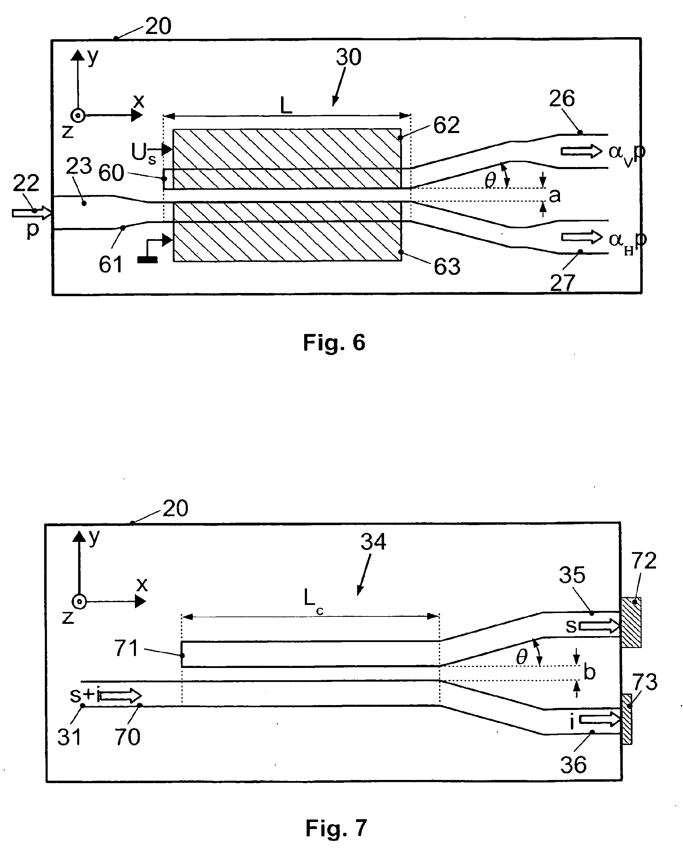

Die beiden Wellenleiter 26, 27 schließen an den Eingangs-Wellenleiter 23 über einen Strahlteiler 30 an, welcher in Fig. 3 schematisch durch einen Y-Wellenleiter angedeutet ist. Dieser Strahlteiler 30 kann in einem bevorzugten Ausführungsbeispiel so wie in Fig. 6 dargestellt ausgeführt sein, wie weiter unten noch näher zu erläutern sein wird.

Die beiden Wellenleiter 26, 27 sind über in einem Vereinigungs-Wellenleiter 31 zusammenlaufende Wellenleiter 32, 33 mit einem Wellenlängenfilter 34 verbunden, das zwei Wellenleiter-Ausgänge 35, 36 zur Abgabe einerseits von Signalphotonen s (beispielsweise mit einer Vakuumwellenlänge von $\lambda_s = 2\pi c/\omega_s$ 1,55 $\mu$m bei einer Pumpwellenlänge von $\lambda_p = 0{,}532$ $\mu$m) sowie andererseits von Idlerphotonen i (z.B. mit einer Vakuumwellenlänge von $\lambda_i = 2\pi c/\omega_i = 0{,}81$ $\mu$m bei der gleichen Pumpwellenlänge) versehen ist. Diese Idlerphotonen i werden in der Quantenkryptographie für Messzwecke eingesetzt, wogegen die Signalphotonen zur Schlüsselbildung dienen, wie dies an sich bekannt ist. Eine bevorzugte Ausführungsform des Wellenlängenfilters 34 wird nachfolgend noch näher anhand der Fig. 7 erläutert werden. Es sei erwähnt, dass das Wellenlängenfilter 34 mit den Ausgangswellenleitern 35 und 36 auch durch externe faseroptische oder wellenleiterbasierte Komponenten ersetzt werden kann, was in Fig. 3 durch eine strichlierte Trennlinie 37 angedeutet ist. In diesem Fall werden die Signal- und Idlerphotonen direkt vom Wellenleiter 31 in die externe Wellenlängenfiltervorrichtung eingekoppelt.

Im Betrieb wird ein vertikal polarisierter Pumpstrahl 22, mit Pumpphotonen p, mit der (Kreis-)Frequenz $\omega_p$, in den an der Oberfläche des Substrats 20 vorgesehenen Eingangs-Wellenleiter 23 "eingeschossen". Im Wellenleiter 23 wird dann die TM-Grundmode angeregt. Bevorzugt kann die Seitenfläche oder Facette des Chips 20 eine Antireflexionsbeschichtung aufweisen, um den Kopplungswirkungsgrad beim Zuführen der Pumpphotonen zu verbessern.

Im Strahlteiler 30 wird sodann das geführte optische Pumpfeld in zwei TM-Grundmoden aufgeteilt und den beiden periodisch gepolten Wellenleitern 26, 27 zugeführt. Der Strahlteiler 30 ist zu diesem Zweck elektrisch abstimmbar. Die Energieanteile für die Wellenleiter 26, 27, bezogen auf die optische Energie im Wellenleiter 23, sollen hier mit $\alpha_V$ und $\alpha_H$ bezeichnet werden.

Im oberen Wellenleiterzweig (erster Wellenleiter 26) erfolgt eine parametrische Typ-I-Abwärtskonvertierung $\omega_p^V \rightarrow \omega_s^V + \omega_i^V$ , d. h. es werden vertikal polarisierte Signalphotonen und ebenfalls vertikal polarisierte Idlerphotonen erhalten. Die Aufspaltung ist in erster Linie durch die Umpolperiode $\Lambda_V$ und die Polungsordnung $m_V$ bestimmt, da die Energieerhaltung und Quasi-Phasen-Anpassungsbedingung gelten müssen:

$$\frac{\omega_p^V}{c}\overline{n}_p^V = \frac{\omega_s^V}{c}\overline{n}_s^V + \frac{\omega_i^V}{c}\overline{n}_i^V + m_V \frac{2\pi}{\Lambda_V} \quad , \quad \omega_p^V = \omega_s^V + \omega_i^V$$

In entsprechender Weise gilt für den in Fig. 3 unten eingezeichneten zweiten Wellenleiter 27 mit der darin erfolgenden Typ-I-Abwärtsumwandlung $\omega_p^V \rightarrow \omega_s^H + \omega_i^H$ (d.h. es werden horizontal polarisierte Signal- und Idlerphotonen erhalten) entsprechend dem Energieerhaltungsgrundsatz und der Quasi-Phasen-Anpassungsbedingung folgendes:

$$\frac{\omega_p^V}{c}\overline{n}_p^V = \frac{\omega_s^H}{c}\overline{n}_s^H + \frac{\omega_i^H}{c}\overline{n}_i^H + m_H \frac{2\pi}{\Lambda_H} \quad , \quad \omega_p^V = \omega_s^H + \omega_i^H$$

Die Polungsperioden und -ordnungen in den Bereichen 24, 25 werden so gewählt, dass die Kreisfrequenzen (bzw. Wellenlängen $\lambda = 2\pi c/\omega$) der erzeugten Signalphotonen einerseits sowie auch der Idlerphotonen andererseits gleich sind, d.h. es gilt

$$\omega_s^V = \omega_s^H \quad \mathrm{bzw.} \quad \omega_i^V = \omega_i^H$$

Gemäß einer Annäherung mit ebener Welle kann diese Bedingung für $\Lambda_V \sim 7,4~\mu\mathrm{m}$, $m_V = 1$ und $\Lambda_H \sim 140~\mu\mathrm{m}$, $m_H = -1$ mit Wellenlängen für die Pump-, Signal- und Idlerphotonen bzw. -felder von 0,532 $\mu$m, 1,55 $\mu$m und 0,81 $\mu$m erfüllt werden.

Zufolge von Herstellungstoleranzen kann das Aufspalten der Wellenlängen bzw. Photonen im Abwärtskonvertierungsprozess etwas differieren. Um dies auszugleichen, können die unterschiedlichen Temperaturabhängigkeiten der effektiven Brechungsindizes $\overline{n}^V$ bzw. $\overline{n}^H$ (welche vom außerordentlichen bzw. ordentlichen Brechungsindex dominiert werden), die in z-geschnittenem Lithiumniobat um einen Faktor von ca. 11 verschieden sind, ausgenützt werden. Hierfür kann eine thermische Abstimmung vorgesehen werden, wobei ein typischer resultierender thermischer Tuning-Grad $d\lambda_s^H / dT \approx 1.7\, nm / K$ betragen kann, während $d\lambda_s^V / dT \approx 0$ ist. Zu dieser thermischen Abstimmung kann an der Unterseite des Substrats 20 ein Heizelement 40, wie in Fig. 4 und 5 angedeutet, vorgesehen sein, wobei dieses Heizelement 40 insbesondere durch ein Peltier-Element gebildet ist, das mit entsprechenden Steueranschlüssen (nicht gezeigt) in an sich herkömmlicher Weise verbunden wird.

Zusätzlich oder anstatt dessen kann eine Feinabstimmung auch unter Verwendung des elektrooptischen Effekts mit Hilfe eines statischen elektrischen Felds durchgeführt werden, welches zwischen den Elektroden 28, 28' gemäß Fig. 3 erzeugt wird, wobei Änderungen der effektiven Brechungsindizes aufgrund eines elektrischen Feldes in die z-Richtung beispielsweise gemäß der Beziehung

$$\Delta\overline{n}^V : \Delta\overline{n}^H = r_{33} : r_{13} \approx 3.5 : 1$$

herbeigeführt werden können.

Für den Betrieb der Einrichtung 10 kann angenommen werden, dass die Tastverhältnisse der $\pm$ - polarisierten Domänen in den Bereichen 24, 25 optimal gewählt werden, nämlich mit einem Verhältnis 1:1 für m = $\pm$1, und dass eine vernachlässigbare Erschöpfung der Pumpwelle bzw. Pumpphotonen gegeben ist. Da gleiche Erzeugungsraten für die vertikal polarisierten und horizontal polarisierten Photonenpaare wünschenswert sind (die Konstante IAI im in Gl. 4 angegebenen Zustandsvektor sollte eins sein), kann der für die Anteile $\alpha_V$ und $\alpha_H$ verantwortliche Strahlteiler 30 entsprechend eingestellt werden. Im Fall eines z-geschnittenen Lithiumniobat-Materials ist dafür anzusetzen:

$$\alpha_V : \alpha_H = \left(d_{\text{eff}}^H L_H\right)^2 : \left(d_{\text{eff}}^V L_V\right)^2 = \left(d_{31} L_H\right)^2 : \left(d_{33} L_V\right)^2$$

Demgemäß ist das Teilungsverhältnis am Strahlteiler 30 mit $\alpha_V{:}\alpha H \approx (L_H/(7L_V))^2$ zu wählen. Aufgrund des Platzbedarfes der Elektrode 29 zur elektrooptischen Justierung der Phase φ von einigen Millimetern bis zu einem Zentimeter wird die Länge des periodisch gepolten Bereiches 24 kürzer ausfallen als die Länge des Bereiches 25. Dies hat zur Folge, dass die Asymmetrie in der Aufspaltung der dem Eingangs-Wellenleiter 23 zugeführten Pumpphotonen in im ersten Wellenleiter 26 bzw. im zweiten Wellenleiter 27 geführten Pumpphotonen verringert wird. Die abwärtskonvertierten optischen Felder 38, 39 am Ausgang der umpolbaren Wellenleiter 26, 27 (TM-polarisiert bzw. TE-polarisiert) werden, wie erwähnt, im Wellenleiter 31 zusammengeführt, wonach die zusammengeführten Photonen das Polarisations-unabhängige Wellenlängenfilter (Teiler) 34 durchlaufen, wo das Signalfeld (Signalphotonen s) und das Idlerfeld (Idlerphotonen i) räumlich auf die Ausgangs-Wellenleiter 35, 36 aufgeteilt werden. Die Signalphotonen s und Idlerphotonen i werden in gesonderte optische Lichtleiter eingekoppelt. Auch hier können die Facetten der Wellenleiter 35, 36 mit einer für die Wellenlängen $\lambda_s$ bzw. $\lambda_i$ wirksamen Antireflexionsbeschichtung versehen werden.

Die in der Einrichtung 10 verwendete, im Substrat 20 ausgebildete Gesamt-Wellenleiteranordnung 21 soll sowohl TM-Moden als auch TE-Moden effizient leiten. Dies ist mit üblichen Lithiumniobat-Wellenleitern, die mit Hilfe des Protonen-Austausch-Verfahrens definiert werden, nicht ohne weiteres möglich, da in diesem Fall kein Leitungsmechanismus für die TE-Polarisation gegeben ist. Bei der vorliegenden Einrichtung erweist sich für eine flexible Möglichkeit, die Verteilung des optischen Modenfeldes in den Wellenleitern weitestgehend über Geometrieparameter einzustellen, eine Ausbildung als Rippen-Wellenleiter als günstig, wobei die Rippen-Wellenleiter auf Basis einer epitaktisch gewachsenen dünnen Lithiumniobat-Schicht ausgebildet sein können. In Fig. 4 ist eine derartige Rippen-Wellenleiterausbildung für den Fall des zweiten Wellenleiters 27 gezeigt, wobei eine Rippe 41 an der Oberseite des Substrats bzw. einer Zink-dotierten epitaktischen Schicht 42 des Substrats vorgesehen ist. Über dieser Rippe 41 ist die Elektrode 28 unter Zwischenlage einer dielektrischen Schicht (Isolatorschicht) 43 angebracht, und daneben befindet sich auf der Oberseite des Substrats 20, bzw. genauer der epitaktischen Schicht 42, die Elektrode 28'. Die Rippe 41 hat eine Höhe h und eine Breite w. Das eigentliche Substrat 20 hat einen Brechungsindex, der niedriger ist als jener der epitaktischen Schicht 42, um so sicherzustellen, dass das optische Feld in der z-Richtung geführt wird. Als Substratmaterial kann mit Magnesium dotiertes Lithiumniobat eingesetzt werden, das einen Brechungsindex aufweist, der niedriger ist als jener von undotiertem Lithiumniobat. Im Fall der Zink-dotierten epitaktischen Schicht 42 (Zn-dotiertes $LiNbO_3$) können sowohl der ordentliche als auch der außerordentliche Brechungsindex um ungefähr 0,5 % erhöht werden. Eine seitliche Beschränkung des optischen Felds, d.h. eine Führung der Moden in der y-Richtung, wird durch die Ausbildung der Rippe 41 mit der Breite w und der Höhe h erhalten. Das Moden-Feldmuster 44 der im Wellenleiter 27 geführten TM- und TE-Moden kann durch entsprechende Wahl der geometrischen Parameter h, w sowie auch t (Höhe der ursprünglichen epitaktischen Schicht 42, von der ein Teil an der Oberfläche zur Bildung der Rippe 41 abgetragen wird) bestimmt werden.

Zweckmäßig wird der Wellenleiter 27 so dimensioniert, dass er bei der größten Wellenlänge (also der Signal-Wellenlänge, im beschriebenen Beispiel 1,55 μm) nur eine Einzelmode führt. Weiters sollte die Abweichung von der gezeigten kreisförmigen Querschnittsform des Musters 43 so gering wie möglich sein, um beim Einkoppeln ebenso wie beim Auskoppeln der Photonen einen verlustarmen Übergang vom bzw. zum angeschlossenen Lichtleiter (Glasfaserkabel) zu erzielen.

Die dielektrische Abstands-, Trenn- oder Isolatorschicht 43 hat den Zweck, dass Wellenleiterverluste zufolge einer Absorption im Metall der Elektrode 28 vermieden werden, und diese Schicht 43 kann in an sich herkömmlicher Weise auf der Rippe 41 und seitlich hiervon niedergeschlagen werden, um eine Überlappung des Modenfeldes 44 mit der metallischen Elektrode 28 zu minimieren. Als Material für diese Schicht 43 kann Siliziumdioxid gewählt werden, welches einerseits eine gute Transparenz bei den hier interessierenden Wellenlängen sowie andererseits einen Brechungsindex aufweist, der viel niedriger ist als jener von $LiNbO_3$. Da das elektrische Feld, das zwischen den Elektroden 28, 28' im Betrieb gebildet wird, die Brechungsindizes $n_o$ und $n_e$ der epitaktischen $LiNbO_3$-Filmschicht 42 um verschiedene Beträge modifiziert, kann der effektive Brechungsindex für die TE-Mode (welcher durch $n_o$ dominiert wird) und für die TM-Mode (die hauptsächlich durch $n_e$ bestimmt wird) entsprechend abgestimmt werden. Dies ist v.a. für den Bereich 25 gemäß Fig. 3 von Bedeutung.

Abgesehen von Rippen-Wellenleitern, wie in Fig. 4 gezeigt, können aber selbstverständlich auch andere Arten von Wellenleitern verwendet werden. Beispielsweise ist in Fig. 5 in einem der Fig. 4 entsprechenden Querschnitt eine durch Diffusion von Titan oder Zink in das Substratmaterial gebildete Wellenleiterstruktur, beispielsweise ebenfalls konkret für den zweiten Wellenleiter 27 gemäß Fig. 3, veranschaulicht. Im Einzelnen ist im Lithiumniobat-Substrat 20 ein Bereich 50 mit einer Breite w und einer Tiefe d ausgebildet, wo ein erhöhter Brechungsindex durch Eindiffundieren mit Ti oder Zn erzielt wird, so dass ein Wellenleiter-Kern erhalten wird. Das dann erhaltene Moden-Feldmuster 51 hängt von den Parametern w, d ab und ist im gezeigten Beispiel im Querschnitt näherungsweise elliptisch. Da jedoch das Profil der Erhöhung des Brechungsindex üblicherweise mit der Tiefe im Substrat 20 exponentiell abnimmt (d.h. mit der negativen z-Richtung), werden die optischen Moden bei größeren Wellenlängen tiefer in das Substrat 20 verschoben als optische Moden mit kürzeren Wellenlängen. Demgemäß wird die modale Überlappung der Pump-, Signal- und Idler-Wellen reduziert, was zu einem geringeren Wirkungsgrad bei der Abwärtskonvertierung führt. Außerdem sind gleiche Moden-Größen für die TE- und TM-polarisierten Moden nur schwer zu erreichen, da die Änderungen in den Brechungs-indizes $n_o$ und $n_e$ zufolge der Eindiffundierung der Dotierstoffe von den Prozessparametern beim Diffusionsprozess abhängt; zudem ist der erzielbare Brechungsindexkontrast für $n_o$ geringer als für $n_e$, woraus eine schwächere Führung von TE-Moden resultiert. Nichtsdestoweniger können auch mit dieser Technologie elektrisch abstimmbare Wellenleiter (wie insbesondere der zweite Wellenleiter 27) hergestellt werden, wobei, wie weiters aus Fig. 5 ersichtlich ist, wiederum die Elektroden 28, 28' in der bereits beschriebenen Anordnung für diesen Zweck vorgesehen werden; die Elektrode 28 oberhalb des Bereichs 50 für den Wellenleiter 27 ist dabei wiederum vom Substrat 20 durch eine dielektrische Schicht 43, die wiederum vorzugsweise aus Siliziumoxid besteht, getrennt.

In Fig. 6 ist, wie bereits vorstehend erwähnt, eine Ausführungsform für den Strahlteiler 30 gemäß Fig. 3 schematisch veranschaulicht. Hierfür sind an der Oberfläche des $LiNbO_3$-Substrats 20 zwei Wellenleiter 60, 61 ausgebildet, wobei der gemäß der Darstellung in Fig. 6 untere Wellenleiter 61 direkt an den Eingangs-Wellenleiter 23 (s. auch Fig. 3) anschließt und so die Pumpphotonen p zugeführt erhält. Die beiden Wellenleiter 60, 61 sind in einem vorgegebenen kleinen Abstand a voneinander vorgesehen. Durch diese geringfügige Distanz a zwischen den beiden Wellenleitern 60, 61 wird eine leichte Kopplung der Grundmoden erzielt. Am Ausgang werden die Anteile $\alpha_V$ und $\alpha_H$, entsprechend der Abstandswahl sowie der Wellenleiterausbildung, erhalten. Wenn die beiden Wellenleiter 60, 61 im Kopplungsbereich identisch sind, ist die Leistung im oberen Wellenleiter 60 relativ zur Eingangsleistung in Abhängigkeit von der x-Koordinate sinusförmig und dabei abhängig von der Kopplungslänge (dies ist jene Länge, bei der die optische Leistung vom Wellenleiter 60 vollständig in den unteren Wellenleiter 61 übergeführt wird), wobei die Kopplung bei zunehmendem Abstand a exponentiell abnimmt. Bei Wellenleiterausbildungen, wie vorstehend anhand der Fig. 4 und 5 erläutert, können Kopplungslängen von einigen mm erreicht werden.

Über den Wellenleitern 60, 61 sind Elektroden 62, 63 angeordnet, die ähnlich wie die Elektroden 28, 28' gemäß Fig. 3 an einer Gleichspannung $U_s$ (z.B. in der Größenordnung von 10 V) bzw. an Masse liegen. Das im Betrieb dadurch in den Wellenleitern 60, 61 erzeugte statische elektrische Feld führt zu einer Verstimmung der Wellenleiter 60, 61 relativ zueinander zufolge des elektrooptischen Effekts, wobei der jeweilige Brechungsindex, beispielsweise in der Größenordnung von ca. $10^{-4}$, geändert wird. Damit lässt sich die Aufspaltung der Anteile $\alpha_V$ und $\alpha_H$ an Pumpphotonen in den Wellenleitern 60 und 61 einstellen. Es ist günstig, wenn im Koppelabschnitt mit der Länge L die Wellenleiter 60, 61 schmäler als außerhalb sind, um so einerseits eine größere Überlappung der optischen Felder und dadurch eine Abnahme der Kopplungslänge, und andererseits eine Unterdrückung der Anregung von parasitären Moden höherer Ordnung zu erzielen. Der Übergang der optischen Felder zwischen den breiteren und schmäleren Wellenleiterabschnitten ist adiabatisch. Um Wellenleiterverluste in den schrägen Wellenleiterabschnitten zu vermeiden, ist der Neigungswinkel θ möglichst klein zu halten (typisch im Bereich von 1˚ oder weniger). Es sei angemerkt, dass neben der oben beschriebenen Ausformung des Strahlteilers 30 auch andere Konfigurationen wie asymmetrische Y-Koppler mit elektrooptischen Steuervorrichtungen in Analogie zur oben beschriebenen Ausbildung möglich sind.

Das polarisationsunabhängige Wellenlängenfilter 34 gemäß Fig. 3 kann beispielsweise so wie in Fig. 7 schematisch gezeigt ausgeführt werden. Auf dem Substrat 20 ist oberseitig eine kopplerartige Wellenleiteranordnung mit zwei Wellenleitern 70, 71 angebracht, die einen kleinen Abstand b voneinander aufweisen. Die Länge des Kopplungsbereiches entspricht der Kopplungslänge $L_c$ bei der Signalwellenlänge $\lambda_s$ (z.B. 1,55 $\mu$m) - also jener Länge, bei der Signalphotonen vollständig vom in Fig. 7 unteren Wellenleiter 70 in den oberen Wellenleiter 71 übergekoppelt werden. Eingangsseitig ist der in Zusammenhang mit Fig. 3 erläuterte Vereinigungs-Wellenleiter 31 vorhanden, der die Signalphotonen s und Idlerphotonen i mit den entsprechenden vertikalen und horizontalen Polarisierungen zuführt. Der untere Wellenleiter 70 bildet somit eine Verlängerung oder einen gemeinsamen Ausgangsteil des Vereinigungs-Wellenleiters 31 durch den Wellenlängenfilter-Bereich 34 im Substrat 20, wogegen der andere, obere Wellenleiter 71 einen Koppel-Wellenleiter bildet, wobei der Umstand ausgenutzt wird, dass die Kopplungsstärke exponentiell mit der ansteigenden Wellenlänge zunimmt. Die stärkere Kopplung für größere Wellenlängen ist auf das stärkere Eindringen des Moden-Feldmusters in das Schichtmaterial bei größeren Wellenlängen zurückzuführen. Da die Wellenleiter 70, 71 eine eher schwache Wellenleitung bewirken, sind die Kopplungslängen für die TE(H)-Polarisierung und TM(V)-Polarisierung ungefähr gleich - unter der Voraussetzung, dass die Führung der TE- und der TM-Moden etwa gleich stark ist, was für Rippenwellenleiter entsprechend Fig. 4 der Fall ist. Auf diese Weise wird im angegebenen Beispiel von Signalwellenlängen $\lambda_s$ = 1,55 $\mu$m und Idlerwellenlängen $\lambda_i$ - 0,81 $\mu$m das Signalfeld, d.h. die Signalphotonen, nahezu vollständig in den Koppel-Wellenleiter 71 eingekoppelt, wogegen das Idlerfeld, d.h. die Idlerphotonen, im Wellenleiter 70 bleibt bzw. bleiben.

Zum effizienten Auskoppeln der getrennten Wellenlängen, d.h. Signalphotonen s und Idlerphotonen i, am Ausgang 35 bzw. 36 kann wiederum eine entsprechende, für die jeweilige Wellenlänge angepasste Antireflexionsbeschichtung an der Seitenfläche oder Facette des Wellenleiters angebracht sein, wie in Fig. 7 bei 72 bzw. 73 veranschaulicht ist. Für diese Antireflexionsbeschichtungen 72 bzw. 73 (wie auch für die vorstehend bereits erwähnte, in der Zeichnung nicht näher dargestellte eingangsseitige Antireflexionsbeschichtung) kann Siliziumoxid verwendet werden.

Als Alternative zu dem anhand der Fig. 7 beschriebenen Wellenlängen-Koppler als Wellenlängen-Filter können auch polarisationsunabhängige Multimode-Interferenzeinrichtungen (MMI-Einrichtungen) bzw. faseroptische Komponenten verwendet werden, wie sie etwa bei optisch gepumpten, Erbium-dotierten Glasfaserverstärkern zum Einsatz kommen.

**Patentansprüche**

1. Einrichtung (10) zur Erzeugung von polarisationsverschränkten Photonen mittels parametrischer Abwärtskonvertierung, umfassend:

   • eine Wellenleiterstruktur (21), die in einem Substrat aus optisch nichtlinearem Material mit periodisch gepolten Bereichen (24, 25) ausgebildet ist und zwei sich durch die periodisch gepolten Bereiche (24, 25) erstreckende Wellenleiter (26, 27) aufweist,
   • einen Strahlteiler (30), über den im Betrieb dem einen Wellenleiter (26) ein Anteil ($\alpha$) der Pumpphotonen (p) und dem anderen Wellenleiter (27) der restliche Anteil (1-$\alpha$) der Pumpphotonen (p) zuführbar ist, so dass die Pumpphotonen (p) in den Wellenleitern (26, 27) infolge parametrischer Abwärtskonvertierung in polarisierte Signal- (s) und Idlerphotonen (i) zerfallen,
   • ein zumindest dem anderen Wellenleiter (27) zugeordnetes thermisches (40) und/ oder elektrooptisches Abstimmelement (28, 29) zur Feineinstellung der Wellenlängenverhältnisse bei der Abwärtskonvertierung,
   • eine Vorrichtung (34) zur spektralen Trennung der Signal- (s) und Idlerphotonen (i), welche mehrere Ausgänge (35, 36) aufweist,
   • eine Vereinigungsstrecke (31), über die im Betrieb die Signal- (s) und Idlerphotonen (i) der Vorrichtung (34) zur spektralen Trennung zuführbar sind,
   • eine zumindest dem einen Wellenleiter (26) zugeordnete Einrichtung (29) zur Justierung der relativen Phasenlage zwischen den polarisierten Signal- (s) und Idlerphotonen (i), die im Betrieb an den Ausgängen (35, 36) der spektralen Trennvorrichtung (34) anliegen,

   **dadurch gekennzeichnet**
   **dass** die Wellenleiter (26, 27) und die periodisch gepolten Bereiche (24, 25) so ausgebildet sind, dass im Betrieb die Pumpphotonen (p) im einen Wellenleiter (26) in vertikal polarisierte und im anderen Wellenleiter (27) in horizontal polarisierte Signal- (s) und Idlerphotonen (i) zerfallen,
   und **dass** die Einrichtung (29) zur Justierung der relativen Phasenlage zwischen den polarisierten Signal- (s) und Idlerphotonen (i) eine elektrooptische Einrichtung ist.

2. Einrichtung nach Anspruch 1, **dadurch gekennzeichnet, dass** der Strahlteiler (30) im Substrat (20) ausgebildet ist und eine Wellenleiteranordnung mit zwei Wellenleitern (60, 61) aufweist, mit denen die beiden parallel geschalteten Wellenleiter (26, 27) verbunden sind.

3. Einrichtung nach Anspruch 2, **gekennzeichnet durch** eine dem Strahlteiler (30) im Substrat (20) Zugeordnete elektrooptische Abstimmvorrichtung (62, 63) zur Einstellung des Aufteilungsverhältnisses der der Wellenleiterstruktur (21) zugeführten Pumpphotonen (p) auf die Wellenleiter (26, 27).

4. Einrichtung nach einem der Ansprüche 1 bis 3, **dadurch gekennzeichnet, dass** die Vorrichtung (34) zur spektralen Trennung polarisationsunabhän-gig ist.

5. Einrichtung nach einem der Ansprüche 1 bis 4, **dadurch gekennzeichnet, dass** die Vorrichtung (34) zur spektralen Trennung an einen die Vereinigungsstrecke (31) im Substrat (20) bildenden Vereinigungs-Wellenleiter (31) angeschlossen ist.

**6.** Einrichtung nach einem der Ansprüche 1 bis 5, **dadurch gekennzeichnet, dass** zumindest der andere Wellenleiter (27) ein Rippen-Wellenleiter ist.

**7.** Einrichtung nach einem der Ansprüche 1 bis 5, **dadurch gekennzeichnet, dass** zumindest der andere Wellenleiter (27) ein Diffusionszonen-Wellenleiter ist.

**8.** Einrichtung nach einem der Ansprüche 1 bis 7, **dadurch gekennzeichnet, dass** durch Wahl der Polungs-Perioden und -Ordnungen der periodisch gepolten Substrat-Bereiche (24, 25) die Signalphotonen (s) und die Idlerphotonen (i) in den beiden Wellenleitern (26, 27) jeweils mit der selben Wellenlänge erzeugt werden.

**9.** Einrichtung nach einem der Ansprüche 1 bis 8, **dadurch gekennzeichnet, dass** das Abstimmelement (40) ein mit dem Substrat (20) verbundenes Heizelement (40) zur thermischen Abstimmung umfaßt.

**10.** Einrichtung nach Anspruch 9, **dadurch gekennzeichnet, dass** das Heizelement (40) durch ein mit dem Substrat (20) verbundenes Peltierelement gebildet ist.

**11.** Einrichtung nach einem der Ansprüche 1 bis 10, **dadurch gekennzeichnet, dass** das Substrat (20) aus Lithiumniobat gebildet ist.

**12.** Einrichtung nach Anspruch 11 und Anspruch 7, **dadurch gekennzeichnet, dass** die Wellenleiter (26, 27) durch Diffusion von Ti oder Zn gebildete Wellenleiter sind.

## Claims

**1.** A device (10) for the generation of polarisation-entangled photons by means of parametric down-conversion, comprising:

• a waveguide structure (21) formed in a substrate of optically non-linear material with periodically poled regions (24, 25) and comprises two waveguides (26, 27) extending through the periodically poled regions (24, 25),
• a beam splitter (30) via which, in operation, a proportion ($\alpha$) of the pump photons (p) can be supplied to the one waveguide (26) and the remaining proportion (1-$\alpha$) of the pump photons (p) can be supplied to the other waveguide (27), so that the pump photons (p) in the waveguides (26, 27) degenerate, as a result of parametric down-conversion, into polarised signal photons (s) and idler photons (i),
• a thermal (40) and/or electro-optical tuning element (28, 29) assigned at least to the other waveguide (27) for fine adjustment of the wavelength ratios in the down-conversion,
• means (34) for the spectral separation of the signal photons (s) and the idler photons (i), which has a plurality of outputs (35, 36),
• a unifying path (31) via which, in operation, the signal photons (s) and the idler photons (i) can be supplied to the means (34) for spectral separation,
• means (29) assigned at least to the one waveguide (26) for the adjustment of the phase relationship between the polarised signal photons (s) and idler photons (i), which, in operation, are present at the outputs (35, 36) of the spectral separation means (34),

**characterised in that** the waveguides (26, 27,) and the periodically poled regions (24, 25) are configured such that in operation, the pump photons (p) degenerate in the one waveguide (26) into vertically polarised signal(s) and idler photons (i) and in the other waveguide (27) into horizontally polarised signal (s) and idler photons (i), and **in that** the means (29) for adjustment of the phase relationship between the polarised signal photons (s) and idler photons (i) is an electro-optical means.

**2.** The device according to Claim 1,
**characterised in that** the beam splitter (30) is formed in the substrate and comprises a waveguide arrangement with two waveguides (60, 61), with which the two parallel-connected waveguides (26, 27) are connected.

**3.** The device according to Claim 2,
**characterised by** an electro-optical tuning means (62, 63) associated with the beam splitter (30) in the substrate, for adjusting the ratio of which the pump photons (p) supplied to the waveguide structure (21) are distributed to the waveguides (26, 27).

4. The device according to any one of Claims 1 to 3,
   **characterised in that** the spectral separation means (34) is polarisation-independent.

5. The device according to one of Claims 1 to 4,
   **characterised in that** the spectral separation means (34) is connected to a unifying waveguide (31) in the substrate forming the unifying path (31).

6. The device according to any one of Claims 1 to 5,
   **characterised in that** at least the other waveguide (27) is a ridge-type waveguide.

7. The device according to any one of Claims 1 to 5,
   **characterised in that** at least the other waveguide (27) is a diffusion zone waveguide.

8. The device according to any one of Claims 1 to 7,
   **characterised in that** by the selection of the poling periods and poling orders of the periodically poled substrate regions (24, 25), the signal photons (s) and the idler photons (i) are each generated in the two waveguides (26, 27) with the same wavelength.

9. The device according to any one of Claims 1 to 8,
   **characterised in that** the tuning element (40) comprises a heating element (40) connected with the substrate (20) for thermal tuning.

10. The device according to Claim 9,
    **characterised in that** the heating element (40) is formed by a Peltier element connected with the substrate (20).

11. The device according to any one of Claims 1 to 10,
    **characterised in that** the substrate (20) is formed from lithium niobate.

12. The device according to Claim 11 and Claim 7,
    **characterised in that** the waveguides (26, 27) are waveguides formed by the diffusion of Ti or Zn.

**Revendications**

1. Dispositif (10) pour générer des photons enchevêtrés par polarisation au moyen d'une conversion descendante paramétrique, comprenant :

   • une structure de guide d'ondes (21), qui est formée dans un substrat constitué d'un matériau optiquement non linéaire avec des zones (24, 25) polarisées périodiquement et qui présente deux guides d'ondes (26, 27) s'étendant à travers les zones (24, 25) polarisées périodiquement,
   • un diviseur de faisceau (30), par lequel, en service, une fraction ($\alpha$) des photons pompe (p) peut être acheminée au premier guide d'ondes (26) et la fraction restante (1-$\alpha$) des photons pompe (p) peut être acheminée à l'autre guide d'ondes (27) de sorte que les photons pompe (p) se décomposent dans les guides d'ondes (26, 27), en raison de la conversion descendante paramétrique, en photons signal (s) et en photons inactifs (i) polarisés,
   • un élément d'accord thermique (40) et/ou électrooptique (28, 29) affecté au moins à l'autre guide d'ondes (27) pour le réglage fm des rapports de longueurs d'onde en conversion descendante,
   • un dispositif (34) pour la séparation spectrale des photons signal (s) et des photons inactifs (i), qui présente plusieurs sorties (35, 36),
   • une voie de jonction (31), par laquelle les photons signal (s) et les photons inactifs (i) peuvent être acheminés en service au dispositif de séparation spectrale (34),
   • un dispositif (29) affecté au moins à l'un des guides d'ondes (26) pour ajuster la position de phase relative entre les photons signal (s) et les photons inactifs (i) polarisés, qui sont appliqués en service aux sorties (35, 36) du dispositif de séparation spectrale (34),

   **caractérisé en ce que**
   les guides d'ondes (26, 27) et les zones polarisées périodiquement (24, 25) sont formés de manière à décomposer, en service, les photons pompe (p) en photons signal (s) et en photons inactifs (i) polarisés verticalement dans un guide d'ondes (26) et en photons signal (s) et en photons inactifs (i) polarisés horizontalement dans l'autre guide d'ondes (27), et

**en ce que** le dispositif (29) d'ajustement de la position de phase relative entre les photons signal (s) et les photons inactifs (i) polarisés est un dispositif électrooptique.

2.  Dispositif selon la revendication 1, **caractérisé en ce que** le diviseur de faisceau (30) est formé dans le substrat (20) et présente un agencement de guide d'ondes avec deux guides d'ondes (60, 61), auxquels sont connectés les deux guides d'ondes (26, 27) montés en parallèle.

3.  Dispositif selon la revendication 2, **caractérisé par** un dispositif d'accord électrooptique (62, 63) affecté au diviseur de faisceau (30) dans le substrat (20) et destiné au réglage du rapport de répartition des photons pompe (p) acheminés à la structure de guide d'ondes (21) sur les guides d'ondes (26, 27).

4.  Dispositif selon l'une quelconque des revendications 1 à 3, **caractérisé en ce que** le dispositif de séparation spectrale (34) est indépendant de la polarisation.

5.  Dispositif selon l'une quelconque des revendications 1 à 4, **caractérisé en ce que** le dispositif de séparation spectrale (34) est connecté à un guide d'ondes de jonction (31) formant la voie de jonction (31) dans le substrat (20).

6.  Dispositif selon l'une quelconque des revendications 1 à 5, **caractérisé en ce qu'**au moins l'autre guide d'ondes (27) est un guide d'ondes à nervures.

7.  Dispositif selon l'une quelconque des revendications 1 à 5, **caractérisé en ce qu'**au moins l'autre guide d'ondes (27) est un guide d'ondes à zones de diffusion.

8.  Dispositif selon l'une quelconque des revendications 1 à 7, **caractérisé en ce qu'**en choisissant les périodes et les suites de polarisation des zones de substrat (24, 25) polarisées périodiquement, les photons signal (s) et les photons inactifs (i) sont produits dans les deux guides d'ondes (26, 27) respectivement avec la même longueur d'onde.

9.  Dispositif selon l'une quelconque des revendications 1 à 8, **caractérisé en ce que** l'élément d'accord (40) comprend un élément chauffant d'accord thermique (40) connecté au substrat (20).

10. Dispositif selon la revendication 9, **caractérisé en ce que** l'élément chauffant (40) est formé par un élément Peltier connecté au substrat (20).

11. Dispositif selon l'une quelconque des revendications 1 à 10, **caractérisé en ce que** le substrat (20) est formé à partir de niobate de lithium.

12. Dispositif selon la revendication 11 et la revendication 7, **caractérisé en ce que** les guides d'ondes (26, 27) sont des guides d'ondes formés par diffusion de Ti ou de Zn.

**Fig. 1**

**Fig. 2**

**Fig. 3**

**Fig. 4**

**Fig. 5**

EP 2 051 138 B1

**Fig. 6**

**Fig. 7**

18

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur

- **Gisin, N. ; G. Ribordy ; W. Tittel ; H. Zbinden.** Quantum Cryptography. *Rev. Mod. Phys.,* 2002, vol. 74, 145
- Quantum Cryptography. **N. Lütkenhaus ; M. Hendrych.** Progress in Optics. Elsevier, 2006, vol. 49
- **R. V. Roussev ; C. Langrock ; J. R. Kurz ; M. M. Fejer.** Periodically poled lithium niobate waveguide sum-frequency generator for the efficient single-photon detection at communication wavelengths. *Optics Letters,* 2004, vol. 29, 1518 ff
- **X. Xie ; M. M. Fejer.** Two-spatial-mode parametric amplifier in lithium niobate waveguides with asymmetric Y junctions. *Optics Letters,* 2006, vol. 31, 799ff
- **S. Tanzilli ; W. Tittel ; H. De Riematten ; H. Zbinden ; P. Baldi ; M. De Micheli.** PPLN waveguide for quantum communication. *Eur. Phys. J. D,* 2002, vol. 18, 155ff
- **C. Kurtsiefer ; M. Oberpaierleiter ; H. Weinfurter.** High-efficiency entangled photon pair collection in type-II parametric fluorescence. *Phys. Rev. A,* 2001, vol. 64
- **P. G. Kwiat ; E. Waks ; A. G. White ; I. Appelbaum ; P. H. Eberhard.** Ultra-bright source of polarization-entangled photons. *Physical Review A,* 1999, vol. 60, R773-R776
- **J. B. Altepeter ; E. R. Jeffrey ; P. G. Kwiat.** Phase-compensated ultra-bright source of entangled photons. *Optics Express,* 2005, vol. 13, 8951 ff
- **Y. K. Jiang ; A. Tomita.** The generation of polarization-entangled photon pairs using periodically poled lithium niobate waveguides in a fibre loop. *J. Phys. B,* 2007, vol. 40, 437 ff
- **Y. K. Jiang ; A. Tomita.** Highly efficient polarization-entangled photon source using periodically poled lithium niobate waveguides. *Optics Commun.,* 2006, vol. 267, 278 ff
- **McCaughan.** Low-Loss Polarization-Independent Electrooptical Switches at $\lambda$ = 1.3 $\mu$m. *Journal of Lightwave Technology,* Februar 1984, vol. LT-2 (1), 51-55
- **Masaki Asobe et al.** A Highly Damage-Resistant Zn:LiNbO3 Ridge Waveguide and its Application to a Polarization-Independent Wavelength Converter. *IEEE Jounal of Quantum Electronics,* Oktober 2003, vol. 39 (10), 1327-1333